# EUROPEAN PATENT SPECIFICATION

(11) **EP 1 529 749 B1**
(45) Date of publication and mention of the grant of the patent: **28.02.2007**
(21) Application number: 03425725.3
(22) Date of filing: 10.11.2003
(51) Int. Cl.: B66C 23/697, F16C 29/02, F16C 29/12

(54) **Telescopic column for lifting and/or traction devices**
Teleskopsäule für Hub- oder Zugvorrichtungen
Colonne télescopique pour dispositif de levage ou traction

(43) Date of publication of application: 11.05.2005
(73) Proprietor: SIR Societa Italiana Riduttori S.r.l., 36078 Valdagno (VI) (IT)
(72) Inventor: Battistella, Francesco, 36078 Valdagno (VI) (IT)
(74) Representative: Bonini, Ercole

(56) References cited:
- EP-A- 1 004 784
- DE-U- 20 015 831
- GB-A- 2 114 251

## Description

The present invention relates to a telescopic column according to the preamble of claim 1, particularly adapted to be used on lifting and/or traction devices.

It is known that in order to carry out linear movements, tubular elements mutually sliding one inside the other are sometimes used, thus obtaining a telescopic transmission system.

The tubular elements may be the members directly transmitting the motion if they are directly connected to a power generator or they may be the mechanical guide elements of a translation system.

In other cases they may also carry out at the same time both the abovementioned functions.

According to the prior art said tubular elements may be made with various materials such as aluminium, iron, steel, resins, impregnated fibres, plastics and so forth, and may be obtained with different techniques such as hot extrusion, cold extrusion, molding, calendering, hot shaping, bending and so on.

The mutual sliding of the tubular elements during the telescopic movement is guided by sliding means referred to as shoes.

Such shoes may comprise slipping members or ball and/or roller members.

In addition to the guiding function, said shoes have also the function of making the system rigid so as to balance possible force components orthogonal to the linear motion axis and to support mechanically the telescopic system in a static condition in any stop position.

Since the coupling made by the shoes is both dynamic and static, for this reason it should be very precise.

Indeed, a too tight coupling would increase considerably the sliding friction under dynamic conditions and at starting friction, requiring very high stress and therefore high actuation powers with consequent risk of failure, quick wear and malfunction.

On the contrary a too loose coupling would cause system instability, vibrations, noise and bending if there are force components orthogonal to the motion.

According to a first prior art, shoes are interposed between the tubular elements, each shoe being shimmed relative to the surface of one of the tubular elements, until by trial and error the desired backlash free coupling is obtained.

Another known method provides that the shoes of a standard width, are fixed each at one end of a threaded screw passing through a tapped hole made on the surface of a tubular element and having its end protuding from said tubular element. The contact of each shoe is adjusted by a screwdriver thus obtaining the desired coupling.

EP 1 004 784 discloses a telescopic column according to the preamble of claim 1, a lifting jack consisting of two concentric tubes of different diameter with a power system sliding the tubes with respect to each other along a common longitudinal axis. the tubes are separated by a bearing consisting of two parts with interfaces, the width of which being adjustable.

A first drawback of said known constructional methods consists in that, when the shoes are worn by use, the backlash is increased and the impossibility to restore the startig coupling causes said coupling between the telescopic elements more and more precarious and therefore their operation increasingly unreliable.

Another drawback particularly affecting the first above-mentioned known solution, consist of the need carry out a selective calibration of the shoes through various trials thus affecting the assembling time and consequently the toatl cost of the column.

A further drawback particularly affecting the second above-mentioned known solution,is the need to carry out mechanical workings on the tubular elements to make the tapped through hole.

Another drawback consists of the complex operation of replacing the shoes requiring to dismantle the tubular elements.

The present invention aims at overcoming said drawbacks.

One of the objects of the invention is to provide a telescopic column comprising two or more tubular elements coaxially sliding one inside the other, that still warranling a very precise sliding motion does not require in the assembling stage, shimming operations of the mutually moving parts.

Another object is to adjust the coupling between the tubular elements by regulating the coupling force and therefore the sliding frictions between the elements as a function of the intended use.

A further object is the possibility of adjusting easily in any moment without requiring any dismantling operation.

Another object of the column of the invention is to carry out also the reinforced electric insulation between the tubular elements according to the presently in force rules.

Still another object is that the sliding, means may be carried out with different materials in order to minimize the friction coefficients and at the same time optimise the mechanical resistance of the system thus reducing wear.

The foregoing objects are attained by making a telescopic column for lifting and/or traction devices that according to the main claim comprises:
- two or more telescopically coupled coaxial tubular elements defining a longitudinal sliding direction;
- sliding means inserted into the gap defined between said tubular elements,
wherein each of said sliding means comprises:
- at least a first shoe fixedly secured to a first tubular element;
- at least a second shoe fixedly secured to said first shoe and in contact with a second tubular element coaxially coupled to said first tubular element;
- an intermediate shoe arranged between said first shoe and said second shoe;
- adjusting means adapted to modify the position of said intermediate shoe to move said first shoe and said second shoe and vary the adhesion against said tubular elements.

According to a preferred embodiment the first and the second shoe have contact surfaces with the intermediate shoe, inclined relative to the longitudinal axis of the tubular elements.

In this way the intermediate shoe takes a wedge shaped profile.

Moreover, the first and the second shoe on the side opposite to the relevant inclined surface, have a sliding surface parallel to the longitudinal axis of the tubular elements, which is put in contact with the adjacent tubular element.

By acting on the adjusting means it is possible to move longitudinally the intermediate shoe so as to change the mutual distance between the first and the second shoe in a direction orthogonal to the longitudinal axis so as to modify the adhesion against the tubular elements.

Advantageously each intermediate shoe is arranged with a backlash in a seat made in the first shoe allowing a limited mutual traverse sliding of the shoes in order to recover the twist and the parallelism tolerance between the tubular elements.

Still advantageously by using shoes made of different materials, the mechanical features are optimised such as the strength or the functional features such as the sliding operation.

The foregoing objects and advantages will be better understood by the following description of a preferred embodiment of the invention with reference to the accompanying sheets of drawings in which.
- Figure 1 is an isometric view of a couple of tubular elements belonging to the telescopic column of the invention;
- Figure 2 is a partial longitudinal sectional view of Figure 1;
- Figure 3 is an exploded isometric view of details of Figure 2;
- Figure 4 is a longitudinal sectional view of the assembled details of Figure 3;
- Figure 5 is a front view of one of the details of Figure 4; and
- Figure 6 is a plan view of the detail of Figure 5.

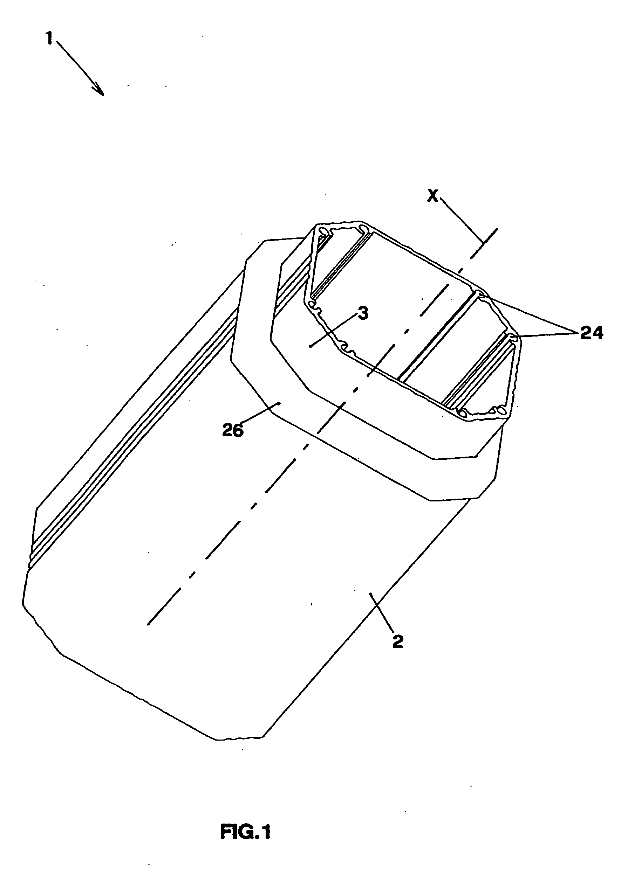

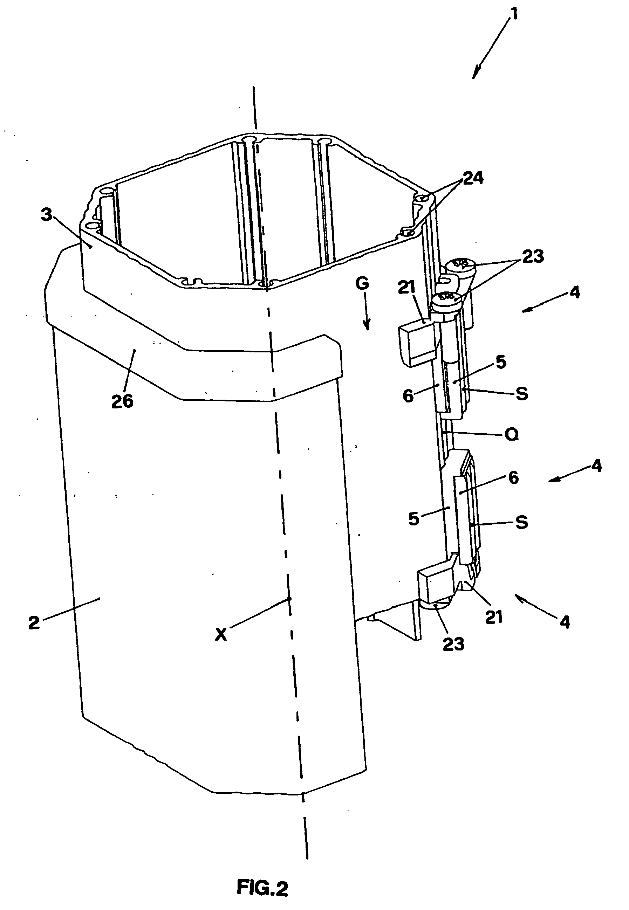

As shown in Figures 1 and 2 the telescopic column of the invention generally indicated with numeral 1, comprises a couple of coaxial tubular elements inserted one inside the other and more particularly a first tubular element constituting the outer tubular element 2 and a second tubular element constituting the inner tubular element 3, defining a longitudinal sliding direction X coaxial to both elements.

In the embodiment of the invention to be described hereinafter, the coaxial tubular elements are two, but it is to be understood that the following description may be extended to a telescopic column comprising any number of tubular elements.

Moreover, the tubular elements having an octagonal shape when seen in orthogonal section, may also have cross sections of different shape.

In the gap G defined between the outer tubular element 2 and the inner tubular element 3, sliding means are interposed, each of them being generally indicated with numeral 4 in Figure 2.

In the described embodiment the sliding means 4 are arranged in pairs and are aligned one after the other at different sides of the tubular elements to enhance their sliding along the longitudinal direction X.

Still referring to the particular embodiment described in Figure 2, a couple of said sliding means 4 is arranged on four walls of the tubular elements 2; 3, and opposite at 180° in pairs to obtain an optimal guide.

As a general rule it is, however, to be pointed out that the number of sliding means and their arrangement may change according to the cross-sectional-shape of the tubular elements.

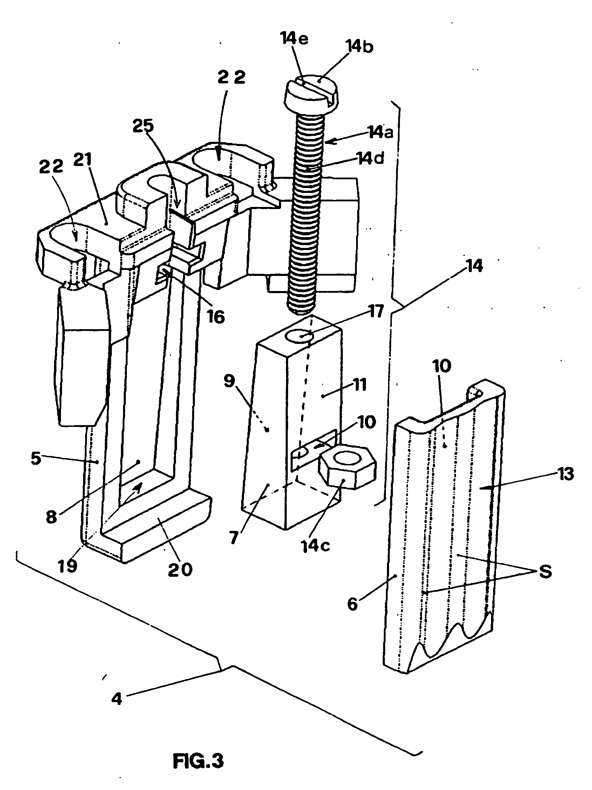

As to the sliding means 4, referring also to Figures 3 to 6, each of them comprises a set of three shoes namely:
- a first shoe 5 which is fixed to the outer tubular element 2 and the inner tubular element 3 respectively;
- a second shoe 6 fixedly secured to the first shoe 5 and in contact with the inner tubular element 3 and the outer tubular element 2 respectively;
- and an intermediate shoe 7 which is arranged between each first shoe 5 and each second shoe 6.

Each first shoe 5 has an inclined surface 8 in contact with a relevant first inclined surface 9 belonging to the corresponding intermediate shoe 7 and similarly each second shoe 6 has an inclined surface 10 in contact with a relevant second inclined surface 11 belonging to the same intermediate shoe 7.

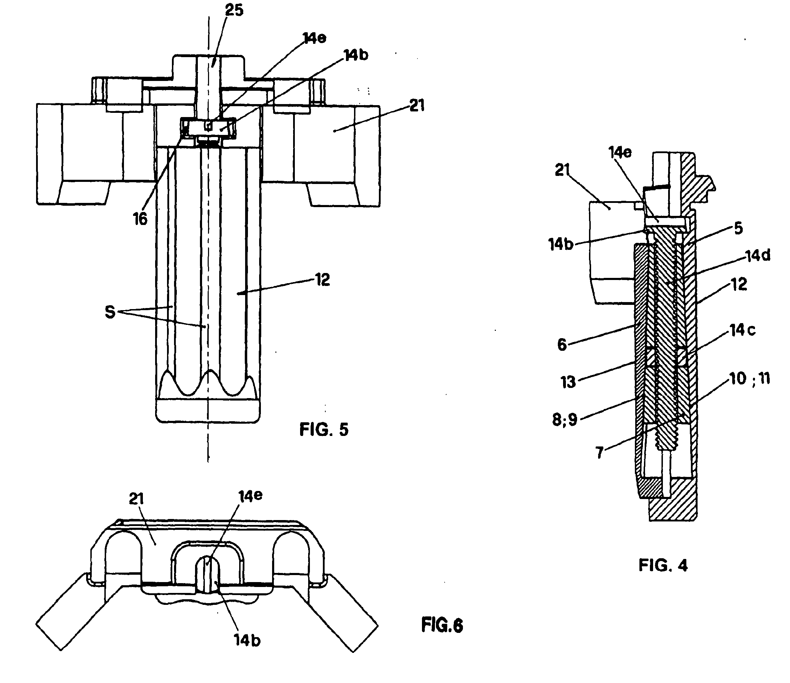

In this way any movement of the intermediate shoes in the longitudinal direction X modifies the total width L of each first shoe 5 and the corresponding second shoe 6 in the direction traversal to the longitudinal sliding direction X of the tubular elements as shown in Figure 4.

Since each intermediate shoe 7 has a profile in the form of an isosceles trapezium, the movement in the direction traversal to the longitudinal direction X is shared into equal parts between each first shoe 5 and the corresponding second shoe 6.

Each of said first shoes 5 and second shoes 6 at the opposite side of the corresponding inclined surface 8 and 10 has a sliding surface leaning on the corresponding surface of the relevant tubular element.

More particularly, each first shoe 5 has a first sliding surface 12 leaning on the inner surface of the outer tubular element 2 and the outer surface of the inner tubular element 3 respectively, and similarly each second shoe 6 has a second sliding surface 13 leaning on the outer surface of the inner tubular element 3 and the inner surface of the outer tubular element 2 respectively.

Preferably, but not necessarily, each sliding surface 12 and 13 has also opposing grooves S matching corresponding opposing counter grooves Q made on the relevant surfaces of the tubular elements 2; 3.

Therefore one can see that by causing each intermediate shoe 7 to slide along the longitudinal direction X, one can modify the width L between each first and second shoe adapting to the width of the gap G between the tubular elements so as to adjust their mutual backlash and tightening.

In order to move each intermediate shoe 7 along the longitudinal direction X, adjusting means generally indicated with 14 and shown in Figures 3 and 4 are provided, each comprising a screw 14a with driving head 14b accessible to the operator and inserted in a seat 16 made in each first shoe 5.

Each screw 14 has the shaft 14d inserted into a through hole 17 made longitudinally in the intermediate shoe 7 and coupled to a nut screw 14c arranged in a slit 18 made in said intermediate shoe.

Each first shoe 5 is also provided with a seat 19 receiving the intermediate shoe 7 in which the inclined surface 8 is made.

Moreover, the first shoe 5 has also a projecting edge 20 fixedly supporting the second shoe 6.

The seat 19 and the projecting edge 20 therefore cause the shoes to be fixedly connected to each other.

One can see in Figures 3 and 4 that each first shoe 5 is also provided with a shaped head 21 provided with holes 22 adapted to receive fastening screws 23 fixing each first shoe 5 to the corresponding tubular element.

More particularly, each fastening shoe 23 is fixed in a longitudinal channel running on each tubular element, of which in Figure 2 only the longitudinal channels 24 of the inner tubular element 3 are shown, receiving the fastening screws 23 of the first shoe 5.

Obviously similar longitudinal channels are provided in the outer tubular element 2 to receive the screws 23 of the other first shoe 5.

One can also see that in each first shoe 5 there is a channel 25 made in the shaped head 21 allowing to reach the head 14b of the adjusting screw 14a with a tool.

Preferably the head 14b is provided with a driving notch 14e to receive the tip of a screwdriver.

The gap between the tubular elements is closed by an annular gasket 26 closing the gap G between the tubular elements and having the same shape of the orthogonal section of said tubular elements.

From the foregoing description one can understand that by acting on the adjusting screw 14 of each couple of shoes, one can adjust the pressure of the shoes against the surfaces of the tubular elements so as to adjust the friction generated during the movement.

At the same time one can recover also the backlash existing at the assembling time, that in a maintenance operation allows to recover possible backlash that could be caused by wear.

in a constructional variation which is not being illustrated for the sake of simplicity, the adjusting means instead of screws and corresponding nut screws, may consist of cam means also outside controlled and cooperating with corresponding counter cams belonging to said shoes.

Such a constructional variation of the adjusting means may be useful in the event that the telescopic column of the invention is made according to a further constructional modification in which the shoes are arranged in such a way that the sliding direction defined by them is orthogonal to the sliding direction of the tubular elements.

Another constructional modification provides that between the second flat surface of each second shoe and the corresponding opposite surface of the tubular element there are ball and/or roller sliding members that are received in corresponding seats made in the relevant second shoe.

In this way, the sliding action between the shoe surface and the surface of the tubular element occurs by rolling friction of the balls and/or rollers that notoriously has lower friction coefficients in comparison with the sliding friction generated in case of the sliding movement when the two surfaces are directly in contact with each other.

In the telescopic column of the present invention, whichever be the constructional variation by which it is made, all the adjustments are carried out without dismantling the column and therefore in an easy, quick and consequently cheap way.

From the foregoing it is clear that the described telescopic column attains all the intended objects.

In the executive stage many modifications may be resorted to the tubular elements of the column, to the sliding shoes and to the adjusting devices, but said modifications when falling within the scope of the appended claims, should be considered to be all protected by the present patent.

## Claims

1. A telescopic column (1) for lifting or traction devices comprising:
- two or more coaxial tubular elements (2; 3) telescopically coupled to each other and defining a longitudinal sliding direction (X);
- sliding means (4) inserted into the gap (G) defined between said tubular elements (2; 3),
each of said sliding means (4) comprising:
• at least a first shoe (5) fixedly secured to a first tubular element (2; 3);
• at least a second shoe (6) fixedly secured to said first shoe (5) and in contact with a second tubular element (3; 2) coaxially coupled to said first tubular element (2; 3);
**characterized in that** said sliding means (4) further comprise:
- an intermediate shoe (7) interposed between said first shoe (5) and said second shoe (6); and
- adjusting means (14) adapted to modify the position of said at least an intermediate shoe (7) to move radially said first shoe (5) and said second shoe (6) to vary their adhesion against said tubular elements (2; 3).

2. The telescopic column (1) according to claim 1) **characterized in that** said first shoe (5) has a seat (19) receiving the corresponding intermediate shoe (7) and a projecting edge (20) supporting the corresponding second shoe (6).

3. The telescopic column (1) according to claim 2) **characterized in that** each first shoe (5) and each second shoe (6) have a single inclined surface (8; 10) relative to said longitudinal direction (X), put in contact with a corresponding intermediate shoe (7) arranged between them.

4. The telescopic column (1) according to claim 3) **characterized in that** said inclined surface (8) of said first shoe is made in said seat (19).

5. The telescopic column (1) according to claim 2) **characterized in that** each said first shoe (5) and said second shoe (6) has at least a sliding surface (12; 13) arranged on the opposite side of said relevant inclined surface (8; 10), in contact with the corresponding tubular element (2; 3) and parallel to said longitudinal sliding direction (X).

6. The telescopic column (1) according to claim 5) **characterized in that** each of said sliding surfaces (12; 13) has opposing grooves (S) matching corresponding opposing counter grooves (Q) made on said tubular elements (2; 3).

7. The telescopic column (1) according to claim 6) **characterized in that** sliding means are interposed between each of said sliding surfaces (12; 13) and the corresponding opposite surface of the tubular element (2; 3).

8. The telescopic column (1) according to claim 7) **characterized in that** said sliding means are ball members.

9. The telescopic column (1) according to claim 7) **characterized in that** said sliding means are roller members.

10. The telescopic column (1) according to claim 1) or 2) **characterized in that** said intermediate shoe (7) has to inclined surfaces (9; 11) opposite to each other and adapted to define a profile in the form of an isosceles trapezium for said intermediate shoe (7).

11. The telescopic column (1) according to claim 1) **characterized in that** said adjusting means (14) comprise at least a screw (14a) having its shaft (14d) inserted in a through hole (17) longitudinally made in a corresponding intermediate shoe (7), said screw being coupled in a nut screw (14c) arranged in a slit (18) made in said intermediate shoe (7) said screw (14a) being provided with a control head (14b) accessible to the operator.

12. The telescopic column(1) according to claim 11) **characterized in that** said control head (14b) is arranged in a seat (16) made in a shaped head (21) of said first shoe (5).

13. The telescopic column (1) according to claim 11) **characterized in that** in said shaped head (21) there is a channel (25) communicating with said seat (16) for inserting a driving tool for said head (14b) of said screw (14a).

14. The telescopic column (1) according to claim 13) **characterized in that** each of said tubular elements (2, 3) has longitudinal channels (24) each of them being adapted to receive connecting means of the shaped head (21) of a relevant shoe.

15. The telescopic column (1) according to claim 14) **characterized in that** said connecting means consist of screws (23).

16. The telescopic column (1) according to claim 1) **characterized by** comprising an annular gasket (26) to close the gap (G) defined between said tubular elements (2; 3).

17. The telescopic column (1) according to claim 1) **characterized in that** said shoes (5; 6; 7) are made with the same material.

18. The telescopic column (1) according to claim 1) **characterized in that** said shoes (5; 6; 7) are made by different materials.

## Patentansprüche

1. Teleskopsäule (1) für Hub- oder Zugvorrichtungen, Folgendes umfassend:
- ein oder mehrere koaxiale, röhrenförmige Elemente (2; 3), die teleskopartig miteinander verbunden sind und eine Längs-Gleitrichtung (X) definieren;
- in den Zwischenraum (G) zwischen den röhrenförmigen Elementen (2; 3) eingefügte Gleitmittel (4);
wobei jedes der Gleitmittel (4) Folgendes umfasst:
• wenigstens einen ersten Gleitschuh (5), der fest an einem ersten röhrenförmigen Element (2; 3) verankert ist;
• wenigstens einen zweiten Gleitschuh (6), der fest am ersten Gleitschuh (5) verankert ist und Kontakt mit einem zweiten, röhrenförmigen Element (3; 2) hat, das koaxial mit dem ersten, röhrenförmigen Element (2; 3) verbunden ist;
**dadurch gekennzeichnet, dass** die Gleitmittel (4) des Weiteren umfassen:
- einen Zwischen-Gleitschuh (7) zwischen dem ersten Gleitschuh (5) und dem zweiten Gleitschuh (6); und
- Reguliermittel (14), die geeignet sind, die Position von dem wenigstens einen Zwischen-Gleitschuh (7) zu verändern, um den ersten Gleitschuh (5) sowie den zweiten Gleitschuh (6) radial zu bewegen und so ihre Haftung an den röhrenförmigen Elementen (2; 3) zu verändern.

2. Die Teleskopsäule (1) gemäß Patentanspruch 1), **dadurch gekennzeichnet, dass** der erste Gleitschuh (5) einen Sitz (19) umfasst, der den entsprechenden Zwischen-Gleitschuh (7) und eine den entsprechenden zweiten Gleitschuh (6) tragende, vorstehende Kante (20) aufnimmt.

3. Die Teleskopsäule (1) gemäß Patentanspruch 2), **dadurch gekennzeichnet, dass** jeder erste Gleitschuh (5) und jeder zweite Gleitschuh (6) eine einzige, hinsichtlich der Längsrichtung (X) geneigte Oberfläche (8; 10) aufweisen, die in Kontakt mit einem zwischen ihnen befindlichen Zwischen-Gleitschuh (7) steht.

4. Die Teleskopsäule (1) gemäß Patentanspruch 3), **dadurch gekennzeichnet, dass** die geneigte Oberfläche (8) des ersten Gleitschuhs sich in dem Sitz (19) befindet.

5. Die Teleskopsäule (1) gemäß Patentanspruch 2), **dadurch gekennzeichnet, dass** jeder erste Gleitschuh (5) und der zweite Gleitschuh (6) wenigstens eine Gleitfläche (12; 13) aufweisen, die an der gegenüber der geneigten Oberfläche (8; 10) liegenden Seite positioniert ist, in Kontakt mit dem entsprechenden, röhrenförmigen Element (2; 3) hat und parallel zur Längs-Gleitrichtung (X).

6. Die Teleskopsäule (1) gemäß Patentanspruch 5), **dadurch gekennzeichnet, dass** jede der Gleitflächen (12; 13) entgegenwirkende Rillen (S) aufweist, die mit entgegengesetzten Gegenrillen (Q) an den röhrenförmigen Elementen (2; 3) zusammenpassen.

7. Die Teleskopsäule (1) gemäß Patentanspruch 6), **dadurch gekennzeichnet, dass** Gleitmittel zwischen jeder der Gleitflächen (12; 13) und der entsprechenden, gegenüber liegenden Oberfläche des röhrenförmigen Elements (2; 3) eingefügt sind.

8. Die Teleskopsäule (1) gemäß Patentanspruch 7), **dadurch gekennzeichnet, dass** die Gleitmittel Kugelelemente sind.

9. Die Teleskopsäule (1) gemäß Patentanspruch 7), **dadurch gekennzeichnet, dass** die Gleitmittel Rollenelemente sind.

10. Die Teleskopsäule (1) gemäß Patentanspruch 1) oder 2), **dadurch gekennzeichnet, dass** der Zwischen-Gleitschuh (7) zwei einander entgegengesetzte, geneigte Flächen (9; 11) aufweist, die geeignet sind, ein Profil in der Form eines gleichschenkligen Trapezes für den Zwischen-Gleitschuh (7) zu definieren.

11. Die Teleskopsäule (1) gemäß Patentanspruch 1), **dadurch gekennzeichnet, dass** die Reguliermittel (14) wenigstens eine Schraube (14a) aufweisen, deren Schaft (14d) in eine in Längsrichtung in einem entsprechenden Zwischen-Gleitschuh (7) verlaufende, durchgehende Bohrung (17) eingesteckt ist, wobei diese Schraube in eine Mutterschraube (14c) gekuppelt ist, die sich in einem Langloch (18) im Zwischen-Gleitschuh (7) befindet, und die Schraube (14a) mit einem dem Bediener zugänglichen Regelkopf (14b) versehen ist.

12. Die Teleskopsäule (1) gemäß Patentanspruch 11), **dadurch gekennzeichnet, dass** der Regelkopf (14b) sich in einem Sitz (16) in einem geformten Kopf (21) des ersten Gleitschuhs (5) befindet.

13. Die Teleskopsäule (1) gemäß Patentanspruch 11), **dadurch gekennzeichnet, dass** sich im geformten Kopf (21) ein Kanal (25) befindet, der mit dem Sitz (16) zum Einsetzen einer Antriebsvorrichtung für den Kopf (14b) der Schraube (14a) kommuniziert.

14. Die Teleskopsäule (1) gemäß Patentanspruch 13), **dadurch gekennzeichnet, dass** jedes der röhrenförmigen Elemente (2; 3) Längskanäle (24) aufweist, von denen ein jeder geeignet ist, Verbindungsmittel des geformten Kopfs (21) eines entsprechenden Gleitschuhs aufzunehmen.

15. Die Teleskopsäule (1) gemäß Patentanspruch 14), **dadurch gekennzeichnet, dass** diese Verbindungsmittel Schrauben (23) sind.

16. Die Teleskopsäule (1) gemäß Patentanspruch 1), **dadurch gekennzeichnet, dass** sie eine ringförmige Dichtung (26) zum Schließen des Zwischenraums (G) zwischen den röhrenförmigen Elementen (2; 3) umfasst.

17. Die Teleskopsäule (1) gemäß Patentanspruch 1), **dadurch gekennzeichnet, dass** die Gleitschuhe (5; 6; 7) aus dem gleichen Material bestehen.

18. Die Teleskopsäule (1) gemäß Patentanspruch 1), **dadurch gekennzeichnet, dass** die Gleitschuhe (5; 6; 7) aus unterschiedlichen Materialien bestehen.

## Revendications

1. Une colonne télescopique (1) pour dispositifs de levage ou de traction comprenant:
- deux ou plusieurs éléments tubulaires coaxiaux (2; 3) couplés d'une manière télescopique l'un à l'autre et définissant une direction de coulissement longitudinale (X);
- des moyens de coulissement (4) insérés dans l'espace (G) défini entre lesdits éléments tubulaires (2; 3),
chacun desdits moyens de coulissement (4) comprenant:
• au moins un premier patin (5) solidaire d'un premier élément tubulaire (2; 3);
• au moins un deuxième patin (6) solidaire dudit premier patin (5) et en contact avec un deuxième élément tubulaire (3; 2) couplé d'une manière coaxiale audit premier élément tubulaire (2; 3);
**caractérisée en ce que** lesdits moyens de coulissement (4) comprennent en outre:
- un patin intermédiaire (7) interposé entre ledit premier patin (5) et ledit deuxième patin (6); et
- des moyens de réglage (14) aptes à modifier la position dudit au moins un patin intermédiaire (7) pour déplacer radialement ledit premier patin (5) et ledit deuxième patin (6) et pour varier ansi leur adhésion contre lesdits éléments tubulaires (2; 3).

2. La colonne télescopique (1) selon la revendication 1) **caractérisée en ce que** ledit premier patin (5) a un siège (19) recevant le patin intermédiaire correspondant (7) et un bord saillant (20) supportant le deuxième patin correspondant (6).

3. La colonne télescopique (1) selon la revendication 2) **caractérisée en ce que** chaque premier patin (5) et chaque deuxième patin (6) ont une seule surface inclinée (8; 10) par rapport à ladite direction longitudinale (X), mise en contact avec un patin intermédiaire correspondant (7) positionné entre eux.

4. La colonne télescopique (1) selon la revendication 3) **caractérisée en ce que** ladite surface inclinée (8) dudit premier patin est réalisée dans ledit siège (19).

5. La colonne télescopique (1) selon la revendication 2) **caractérisée en ce que** chacun desdits premiers patins (5) et desdits deuxièmes patins (6) présente au moins une surface inclinée (12; 13) située sur le côté opposé de ladite surface inclinée correspondante (8; 10), en contact avec l'élément tubulaire correspondant (2; 3) et parallèle à ladite direction de coulissement longitudinale (X).

6. La colonne télescopique (1) selon la revendication 5) **caractérisée en ce que** chacune desdites surfaces de coulissement (12; 13) présente des cannelures opposées (S) se couplant avec des contre-cannelures opposées (Q) réalisées sur lesdits éléments tubulaires (2; 3).

7. La colonne télescopique (1) selon la revendication 6) **caractérisée en ce que** lesdits moyens de coulissement sont interposés entre chacune desdites surfaces de coulissement (12; 13) et la surface opposée correspondante dudit élément tubulaire (2; 3).

8. La colonne télescopique (1) selon la revendication 7) **caractérisée en ce que** lesdits moyens de coulissement sont des éléments à billes.

9. La colonne télescopique (1) selon la revendication 7) **caractérisée en ce que** lesdits moyens de coulissement sont des éléments à rouleaux.

10. La colonne télescopique (1) selon les revendications 1) ou 2) **caractérisée en ce que** ledit patin intermédiaire (7) a deux surfaces inclinées (9; 11) opposées l'une à l'autre et aptes à définir un profil en forme de trapèze isocèle pour ledit patin intermédiaire (7).

11. La colonne télescopique (1) selon la revendication 1) **caractérisée en ce que** lesdits moyens de réglage (14) comprennent au moins une vis (14a) ayant sa tige (14d) insérée dans un trou passant (17) réalisé d'une manière longitudinale dans un patin intermédiaire correspondant (7), ladite vis étant couplée dans une vis mère (14c) située dans une fente (18) réalisée dans ledit patin intermédiaire (7), ladite vis (14a) étant fournie d'une tête de contrôle (14b) accessible à l'opérateur.

12. La colonne télescopique (1) selon la revendication 11) **caractérisée en ce que** ladite tête de contrôle (14b) est située dans un logement (16) réalisé dans une tête façonnée (21) dudit premier patin (5).

13. La colonne télescopique (1) selon la revendication 11) **caractérisée en ce que** dans ladite tête façonnée (21) il y a un canal (25) communiquant avec ledit siège (16) pour l'insertion d'un outil de manoeuvre pour ladite tête (14b) de ladite vis (14a).

14. La colonne télescopique (1) selon la revendication 13) **caractérisée en ce que** chacun desdits éléments tubulaires (2; 3) présente des canaux longitudinaux (24) chacun de ceux-ci étant indiqué pour recevoir des moyens de connexion de la tête façonnée (21) d'un patin correspondant.

15. La colonne télescopique (1) selon la revendication 14) **caractérisée en ce que** lesdits moyens de connexion sont des vis (23).

16. La colonne télescopique (1) selon la revendication 1) **caractérisée en ce qu'**elle comprend un joint annulaire (26) pour la fermeture de l'espace (G) défini entre lesdits éléments tubulaires (2; 3).

17. La colonne télescopique (1) selon la revendication 1) **caractérisée en ce que** lesdits patins (5; 6; 7) sont réalisés avec le même matériel.

18. La colonne télescopique (1) selon la revendication 1) **caractérisée en ce que** lesdits patins (5; 6; 7) sont réalisés avec des matériels différents.
